# EUROPÄISCHE PATENTSCHRIFT

(11) **EP 2 278 892 B1**
(45) Veröffentlichungstag und Bekanntmachung des Hinweises auf die Patenterteilung: **19.10.2011**
(21) Anmeldenummer: 09749526.1
(22) Anmeldetag: 22.04.2009
(51) Int. Cl.: A23N 1/00, C12G 1/02, A23L 1/025

(54) **EINRICHTUNG UND VERFAHREN ZUR DRUCKGESTEUERTEN UND DRUCKGEREGELTEN, ELEKTROPORATIVEN BEHANDLUNG BIOLOGISCH PFLANZLICHEM PROZESSGUTS**
DEVICE AND METHOD FOR PRESSURE-CONTROLLED AND PRESSURE-REGULATED ELECTROPORATIVE TREATMENT OF BIOLOGICAL VEGETABLE PROCESS MATTER
DISPOSITIF ET PROCÉDÉ POUR TRAITER UNE MATIÈRE DE PROCÉDÉ BIOVÉGÉTALE PAR ÉLECTROPORATION AVEC RÉGLAGE ET RÉGULATION DE LA PRESSION

(30) Priorität: 17.05.2008 DE 102008024065
(43) Veröffentlichungstag der Anmeldung: 02.02.2011
(73) Patentinhaber: Karlsruher Institut für Technologie, 76131 Karlsruhe (DE)
(72) Erfinder: SACK, Martin, 76287 Rheinstetten (DE)
(86) Internationale Anmeldenummer: PCT/EP2009/002918
(87) Internationale Veröffentlichungsnummer: WO 2009/141036

(56) Entgegenhaltungen:
- WO-A-03/070026
- WO-A-2005/093037
- DE-A1-102007 016 927
- TEDJO W ET AL: "EINSATZ NICHT-THERMISCHER VERFAHREN ZUR ZELL-PERMEABILISIERUNG VON WEINTRAUBEN UND GEWINNUNG VON INHALTSSTOFFEN//USE OF NONTHERMAL PROCESSES FOR CELL PERMEABILIZATION OF WINEMAKING GRAPES" FLUSSIGES OBST, FLUESSIGES OBST, SCHOENBORN, DE, Bd. 69, Nr. 9, 1. Januar 2002 (2002-01-01), Seiten 578-583, XP008047184 ISSN: 0015-4539

## Beschreibung

Die Erfindung betrifft eine Einrichtung zur druckgesteuerten und druckgeregelten, elektroporativen Behandlung biologisch pflanzlichem Prozessguts und ein damit durchführbares Verfahren.

Auf einem Seminar am 2.10.07 des Deutschen Institut für Lebensmitteltechnik, DIL, in Quakenbrück wurde ein Zellaufschlussreaktor zur Behandlung von Abwässern vorgestellt. Dieser Reaktor besitzt plattenförmig angeordnete rechteckförmige Elektroden mit einem Radienprofil am Ein- und Auslass. Seitlich sind die Elektroden zwischen Behandlungsraum und isolierender Seitenwand rechtwinklig abgeschnitten. Die Feldsteuerung erfolgt hierbei nur resistiv durch den Spannungsabfall längs der Flüssigkeit.

Ein Konzept der Firma Diversified Technologies (New Bedford, USA) sieht einen röhrenförmigen Zellaufschlussreaktor mit Ringelektroden vor. Im Innern dieses Reaktors stellt sich bei ausreichender Reaktorlänge in Längsrichtung ein Homogenfeld ein. Das Konzept wurde an der Ohio State University entwickelt.

Die in der Karlsruher Elektroporationsanlage für Wein, KEA-WEIN, eingesetzten Reaktoren weisen eine inhomogene Feldverteilung auf. Bisher wurde der Behandlungsüberdruck bei der Anlage KEA-WEIN durch eine ausgangsseitige Abdrosselung mittels Quetschventil erzielt.

Der Entwurf des oben erwähnten Zellaufschlussreaktors zur Behandlung von Abwässern weist aufgrund der rein resistiven Feldsteuerung im Wandbereich in Elektrodennähe eine gegenüber dem Homogenfeld erhöhte Feldstärke auf. Beispielsweise Traubenkerne am exponierten Elektrodenrand verstärken aufgrund der durch sie hervorgerufenen lokalen Dielektrikums- und Leitfähigkeitssprünge diesen Effekt weiter.

Der röhrenförmige Zellaufschlussreaktor ist vorteilhaft, wenn er aus einer unipolaren Spannungsquelle betrieben wird. In der mobilen Anlage KEA-WEIN kommt aus Platzgründen zur Reduktion des Isolationsabstands ein erdsymmetrisch bipolar betriebener Marxgenerator zum Einsatz. Hierfür ist das Parallelplattenkonzept geeignet, da sich in der Reaktormitte aufgrund der resistiven Spannungsteilung Massepotential einstellt. Dies verhindert eine Potentialverschleppung in Förderrichtung. Bei einer Abdrosselung des Maischestroms mittels eines Quetschventils kommt es insbesondere bei Wein-Maische zu einer Entmischung und nachfolgender Verstopfung des Förderwegs.

Die WO 2005/093037 A1 offenbart eine Einrichtung zur elektroporativen Behandlung biologisch pflanzlichen Prozessguts mit einem Zellaufschlussreaktor, der Bestandteil eines Strömungskanals ist, welcher aus einem dielektrischen Teil besteht und in welchem ein Elektrodenpaar sitzt, welches eine ähnliche Konfiguration aufweist, wie jene des Anspruchs 1. Dieser Strömungskanal wird dabei z.B. von Weinmaischen durchströmt, die durch die Anlage gepumpt werden.

Allgemein wird zur Elektroporation von biologisch pflanzlichem Prozessgut ein Zellaufschlussreaktor benötigt, mit dem ein homogenes elektrisches Feld appliziert werden kann. Insbesondere beim Anlegen höherer elektrischer Felder oberhalb von etwa 20 kv/cm ist es vorteilhaft, das Prozessgut unter Druck zu setzen. Darüber hinaus darf sich die Maische beim Transport/Strömen durch die Anlage keines Falls entmischen. Verstopfungen müssen auf jeden Fall vermieden werden. Damit ist die Aufgabe vorgestellt, die der Erfindung zugrunde liegt. Im Unterschied zu den bisherigen Zellaufschlussreaktoren mit einer inhomogenen Feldverteilung ermöglicht das Homogenfeld eine Nachvollziehbarkeit der Versuche und gleichmäßige Behandlung des Prozessguts. Jedes durch den Zellaufschlussreaktor geförderte Volumenelement wird mit nahezu der gleichen Feldstärke behandelt.

Nach Anspruch 1 ist der Zellaufschlussreaktor, ZAR, Bestandteil eines Strömungskanals für das biologisch pflanzliche Prozessgut. Der Zellaufschlussreaktor besteht aus einem dielektrischen Teil, in dem ein spaltbildendes und den darin geradlinigen Strömungskanal mitbildendes Elektrodenpaar form- und kraftschlüssig sitzt. Die Elektrodenachse schneidet die dortige Kanalachse des Strömungskanals, und beide Elektroden stehen sich stirnseitig spiegelbildlich zur Kanalachse gegenüber. Damit stehen sich auch die beiden zentral freien, in den Strömungskanal exponierten Stirnteilbereiche spiegelbildlich gegenüber. Die beiden spaltbildenden Elektroden sind an einem elektrischen Energiespeicher angeschlossen, der sich impulsmäßig ab einer erreichten, vorgegebenen Ladespannung selbst durchbrechend oder getriggert in den Elektrodenspalt des Zellaufschlussreaktors entlädt. Beispielsweise kann ein solcher impulsmäßig entladbarer Energiespeicher ein Marx-Generator sein.

Der Krümmungsradius der Elektrodenstirnfläche verringert sich von einem zentralen Gebiet der Stirnfläche zu ihrer Kontur hin von einem größten zu einem kleinsten hin bereichsweise oder kontinuierlich. Dieses zentrale Gebiet kann somit eben oder selbst gegenüber außen schwach gekrümmt sein.

Zum druckbeaufschlagbaren Strömen des Prozessguts durch den Zellaufschlussreaktor sitzen eine erste Prozessgutpumpe vor dem Strömungskanaleingang und eine zweite Prozessgutpumpe nach dem Strömungskanalausgang des Zellaufschlussreaktors. Damit wäre das Prozessgut sowohl unterdruckbehaftet als auch überdruckbehaftet durch den Zellaufschlussreaktor strömbar.

Nach Anspruch 10 besteht das mit diesem Zellaufschlussreaktor, ZAR, durchführbare Verfahren aus den folgenden Schritten:

An das sich stirnseitig und spaltbildend spiegelbildlich gegenübersitzende Elektrodenpaar wird eine pulsförmigen Spannung, eine Hochspannung, an das Elektrodenpaar angelegt und dadurch für den Elektroporationsprozess zumindest im zentralen Bereich des Elektrodenspalts während der Pulsdauer ein elektrisches Feld bis zu 100 kV/cm erzeugt. Über die beiden hinsichtlich der Strömung des Prozessguts zueinander in Reihe liegenden Prozessgutpumpen wird der Durchfluss durch den dazwischen liegenden Zellaufschlussreaktor gesteuert und wird der Druck auf das durch den Zellaufschlussreaktor strömende Prozessgut auf einstellbare Konstanz bis zu 10 bar, also Überdruck gesteuert oder über eine Proportionalregelung der Drehzahldifferenz geregelt.

In den von Anspruch 1 direkt oder indirekt abhängigen Ansprüchen 2 bis 8 sind vorteilhafte Ausgestaltungen spezifiziert, die den Verfahrensablauf begünstigen.

Nach Anspruch 2 ist der lichte Querschnitt des Strömungskanals im Zellaufschlussreaktor außerhalb des Elektrodenbereichs einfach rund oder einfach polygonal. Das betrifft genau nur den dielektrischen Teil des Zellaufschlussreaktors. Mit rund ist ein ovaler, elliptischer Querschnitt angesprochen. Vorzugsweise ist der lichte Querschnitt kreisrund, weil das fertigungstechnisch am einfachsten durch spanabhebende Bearbeitung erreichbar ist. Mit polygonal ist mindestens ein viereckiger lichter Querschnitt gemeint, vorzugsweise quadratisch. Dann nämlich bildet das Verhältnis aus lichtem Querschnitt zum Umfang desselben das kleinste Verhältnis, das strömungstechnisch am vorteilhaftesten ist. Für polygonale lichte Querschnitte höherer Ordnung, größer 4-eckig und vorzugsweise geradzahlig, gilt dasselbe. Ob der dielektrische Teil des Zellaufschlussreaktors aus dem Vollen gefertigt wird oder aus Platten geeigneter Stärke zusammen gebaut ist, ist unter normalen fertigungstechnischen und wirtschaftlichen Aspekten festzulegen. Um die dauernde und pulsförmige Druckbeaufschlagung im Zellaufschlussreaktor zu beherrschen, ist seine Wandstärke ausreichend zu dimensionieren. Im Fall eines unerwünschten Durchschlags muss der Zellaufschlussreaktor zusätzlich noch den dadurch verursachten Druckpuls auffangen. Die beiden metallischen Elektroden leiten solche Pulsbelastungen weiter oder reflektieren sie. Deshalb muss das dielektrische Material des Zellaufschlussreaktors elastisch sein. Als geschlossenes, umfassendes Teil muss es Druckstöße aus dem Reaktorinnern auffangen. Als Werkstoff für den dielektrischen Teil des Zellaufschlussreaktor eignet sich beispielsweise Polypropylen, PP, oder Polyethylen, PE.

Die zentral freie, in den Strömungskanal exponierte Stirnteilfläche der jeweiligen Elektrode kann längs zur Kanalachse eine größere Ausdehnung als senkrecht dazu haben (Anspruch 3). Das ist bei rundem, insbesondere kreisrund lichtem Querschnitt des im dielektrischen Teil eingebrachten Strömungskanals stärker ausgeprägt, je größer der Durchmesser der Elektrodenstirn ist. Bei polygonal lichtem Querschnitt muss der Durchmesser der Elektrodenstirn dazu auf jeden Fall größer sein als das ebene Mantelwandteilstück, im Fall des rechteckigen lichten Querschnitts sogar größer als die Rechteckfläche, in der die Elektrode sitzt.

Strömungstechnisch günstig und prozesstechnisch am günstigsten ist nach Anspruch 4 die Situation, wenn der lichte Querschnitt im zentralen Stirnbereich der beiden spaltbildenden Elektroden gleich dem lichten Querschnitt am Strömungskanalein- und -ausgang des Zellaufschlussreaktors ist. Strömungstechnisch wird dadurch vermieden, dass das Prozessgut im Elektrodenspalt nicht schneller strömt als im übrigen Strömungskanal. Prozesstechnisch, weil die Verweildauer des Prozessguts im Spalt nicht verkürzt wird. Konstruktiv lässt sich einstellen, dass der lichte Querschnitt im zentralen Spaltbereich die obige Gleichheitsforderung erfüllt. Außerhalb davon wird der lichte Querschnitt im Spaltgebiet nur noch nahezu gleich einzustellen sein, sei es größer oder kleiner, insbesondere auch, wenn der dielektrische Teil in Elektrodennähe senkrecht auf die Elektrodenstirn stößt und damit sich dort an den elektrischen Feldlinien anschmiegt.

Zur einfachen Steuerung oder Regelung (P-Regelung) ist nach Anspruch 5 (siehe auch den abhängigen Verfahrensanspruch 12) an den Strömungskanal zwischen der ersten Prozessgutpumpe und dem Zellaufschlussreaktor und/oder zwischen dem Zellaufschlussreaktor und der zweiten Prozessgutpumpe ein Pufferspeicher (z. B. Windkessel, Membranspeicher) angeschlossen, der Druckstöße auffängt und neutralisiert. Die einfachste Lösung hierfür ist, wenn der Strömungskanal mindestens teilweise dehnbar ausgestaltet ist.

Zur Applikation eines Homogenfelds dient üblicherweise eine Plattenelektrodenanordnung. Bekanntlich treten an den Plattenrändern Feldüberhöhungen auf, wenn nicht eine Abrundung am Rand der Platten angebracht ist. Übliche Randprofile sind das Rogowski-Profil oder das Borda-Profil. Beide Profile sind für die Anwendung in einem unbeeinflussten Feldraum (im Vakuum oder Gas) konzipiert. Wird der Feldraum jedoch von einer Materialgrenzfläche zwischen Materialien unterschiedlicher elektrischer Eigenschaften durchzogen, muss das Randprofil der Elektroden an den Verlauf dieser Grenzfläche angepasst werden. Dies geschieht durch eine numerische Feldberechnung, bei der das Randprofil iterativ so variiert wird, bis keine Feldüberhöhung mehr im Elektrodenrandbereich auftritt. Fertigungstechnisch günstig ist es, das Randprofil aus Radien zusammenzusetzen.

Nach Anspruch 6 bildet die örtliche Normale der exponierte Oberfläche des dielektrischen Teils entlang eines von der Berührlinie mit dem exponierten Stirnteilbereich der Elektrodenstirn begrenzten Streifens mit der dortigen Normalen der exponierten Stirnteilfläche einen Winkel aus dem Bereich 0 < α <= 90°. Herstellungstechnisch am einfachsten ist, wenn der nur durch das Dielektrikum begrenzte, geradlinige Strömungskanal mit seiner Innenwand geradlinig parallel zur Strömungs-/Kanalachse verläuft. Das ist, je nach dem wie die Elektrode die Wand durchdringt elektrisch mehr oder weniger nachteilig, weil es dann die Grenzflächensituation aus exponierter dielektrischer Innenwand, exponierter Elektrodenstirnteilfläche als Strömungskanalwand gibt, eine so genannte Tripelfläche. Im Bereich dieses Grenzflächenzusammenstoßes bilden sich nachteilige elektrische Situationen bei der elektrischen Felderzeugung aus, und zwar um so nachteiliger, je spitzer die exponierte dielektrische Oberfläche auf die exponierte Elektrodenstirnteilfläche stößt, da dann dort die von der Elektrodenstirnfläche senkrecht austretenden elektrischen Feldlinien durch die dortige dünne spitze dielektrische Schneide in den Strömungskanal durchtreten, wodurch sich lokal über die Feldlinienlänge im Dielektrikum eine isolationstechnisch problematische Überspannung ausbilden kann, die zu lokalen elektrischen Durchschlägen führt. Es ist deshalb elektrisch vorteilhaft und betriebstechnisch zuverlässiger, herstellungstechnisch jedoch aufwendiger, wenn die exponierte dielektrische Oberfläche über eine isolationstechnisch sichere Länge senkrecht auf die Elektrodenstirn stößt, bzw. sich dort idealerweise an den Verlauf des elektrischen Felds anschmiegt.

Ein Betrieb mit Spannungspulsen bewirkt an ungeschirmten Leitungsbereichen eine Aussendung elektromagnetischer Wellen, die für die drahtlose Nachrichtenübermittlung zumindest störend sein können. Das wird durch die Maßnahme gemäß Anspruch 7 in einem breiten Frequenzband unterdrückt. Der Zellaufschlussreaktor ist hierzu vollständig innerhalb eines elektrischen Abschirmvolumens aufgestellt, das durch eine geschlossene Blechwand gefasst ist. Hochfrequenzstrahlung störender Stärke muss hinreichend abgeschirmt werden, d. h. nicht aus dem Abschirmvolumen austreten. Dazu orientiert sich die Wandstärke der Abschirmung an der beim Prozess auftretenden Hochfrequenz größter Wellenlänge/niedrigster Frequenz. Ist diese elektrische Abschirmung auf Erdpotential gelegt, bedeutet sie gleichzeitig einen Berührschutz.

Die beiden Durchdringungen des Strömungskanals durch die Abschirmungswand sind jeweils als elektrisch leitfähige Rohreinheit mit einer Länge von mindestens dem einfachen, vorzugsweise 3- bis 5-fachen Rohrdurchmesser ausgeführt. Die Förderstrecke durch jeweils ein isolierendes Rohr zwischen dem Zellaufschlussreaktor und der Durchdringung der Abschirmung entspricht zu- und abflussseitig mindestens dem 2-fachen Abstand des Elektrodenspalts.

Zur Vermeidung von eventuellen Gasblaseneinschlüssen ist nach Anspruch 8 der Zellaufschlussreaktor innerhalb der Hochfrequenzabschirmung senkrecht aufgestellt. Beim Pumpen strömt das Prozessgut von unten nach oben, so dass Gasblasen nach oben getrieben, mitgerissen werden (siehe den abhängigen Verfahrensanspruch 13). Aufgrund dieser Problematik ist es des Weiteren vorteilhaft, wenn die Winkelhalbierende des Stoßes der exponierten Dielektrikumsfläche auf die exponierte Elektrodenstirnfläche senkrecht zur Strömungsachse steht, da dann strömungstechnisch im Spaltbereich eingangs- und ausgangsseitig gleichartige Verhältnisse bestehen.

Die Werkstoffe, aus denen der Zellaufschlussreaktor gebaut ist, müssen auf jeden Fall prozesstauglich sein, d. h. sie bzw. ihre exponierten Oberflächen müssen gegenüber dem durchströmenden Prozessmedium inert bleiben. Eventuell geringer, unvermeidlicher Abrieb darf bei Anwendungen in der Lebensmittelverarbeitung keine toxische Wirkung entfalten. Die im Zellaufschlussreaktor exponierten Werkstoffe müssen daher lebensmittelverträglich sein; zumindest aber die exponierten Oberflächen einen solchen Überzug haben. Fertigungstechnisch liegt es nahe, Halbzeugwerkstoffe zu verwenden, die mechanisch gut bearbeitbar und unter Prozessbedingungen elastisch bleiben, also nicht spröde sind, da ja sowohl für den dielektrischen Teil des Zellaufschlussreaktors als auch für die beiden spaltbildenden metallischen Elektroden beim Prozessieren, insbesondere in einem unerwünschten Durchschlagsfall eine pulsförmige Druckbelastung besteht. Darüber hinaus muss der dielektrische Werkstoff elektrisch isolierend und im Nennbetrieb hochspannungsfest bleiben. Die Wandstärke des dielektrischen Materials des Zellaufschlussreaktors muss an seiner schwächsten Stelle so stark sein, dass die mechanischen Stöße beim Prozessieren im Nennbetriebsbereich sicher elastisch aufgefangen werden. Beim Herstellen aus dem Vollen ist ein Material mit hinreichendem Durchmesser zu wählen, beim Herstellen aus Platten eine hinreichende Wandstärke. Als Isoliermaterial vorteilhaft sind PP und PE, als Elektrodenmaterial Edelstahl (V2A, V4A) (Anspruch 9).

Ohne Einschränkung kann ein und derselbe Zellaufschlussreaktor nach einem der Ansprüche 1 bis 9 symmetrisch bipolar zu den spaltbildenden Elektroden oder unipolar bei einer der beiden Elektroden als Bezugselektrode betrieben werden. Zum Prozessieren des durch den Zellaufschlussreaktor strömenden Prozessguts wird an das spaltbildende Elektrodenpaar eine zu einem Bezugspotential, üblicherweise Erdpotential, symmetrische Spannung oder eine Spannung zwischen den beiden spaltbildenden Elektroden, die sich zu einer der beiden auf einem Bezugspotential liegenden Elektroden ausbildet, angelegt.

Die Erfindung wird anhand der Zeichnung für einen Zellaufschlussreaktor, ZAR, zur Elektroporation von beispielsweise Frucht-Maischen weiter erläutert. Die Zeichnung besteht aus den Figuren 1 bis 7 und zeigt im Einzelnen:
Figur 1 den Zellaufschlussreaktor im Schnitt;
Figur 2 den Stirnbereich der Elektrode;
Figur 3 das dielektrische Verschraubungsteil;
Figur 4 den Anschlussbolzen;
Figur 5 den Querschnittsübergang;
Figur 6 die exponierte Elektrodenstirnteilfläche;
Figur 7 Äquipotentiallinienverlauf.

Auch zum Zweck der Maische-Elektroporation wird ein Zellaufschlussreaktor eingesetzt, der zumindest im zentralen Spaltbereich ein gepulstes homogenes elektrisches Feld appliziert. Beim Anlegen höherer elektrischer Felder oberhalb von etwa 20 kV/cm ist es vorteilhaft, wie sich experimentell zeigte, die Maische unter Druck zu setzen. Mit dem erfindungsgemäßen Zellaufschlussreaktor entmischt sich die Maische beim Transport/Strömen durch die Anlage nicht. Auch treten aufgrund zumindest stetiger Kanalübergänge keine Verstopfungen auf.

Damit Fruchtmaische ohne Entmischung und Verstopfung durch die Anlage transportiert werden kann, ist es vorteilhaft, den Förderquerschnitt nicht zu verändern. Da die Applikation eines Homogenfeldes in einer Plattenanordnung einen rechteckigen oder quadratischen Querschnitt erfordert, ist ein querschnittsgleicher Übergang von den runden Schläuchen und Rohrleitungen auf den Elektroporationskanal und umgekehrt erforderlich. Der Übergang wird vorteilhafterweise konisch gestaltet. Ferner darf die Fördergeschwindigkeit nicht zu gering gewählt werden.

Zur Vermeidung von Teildurchschlägen innerhalb von Luftblasen, die mit der Maische mitgeführt werden, muss die Maische zur Applikation höherer Feldstärken bei erhöhtem Druck behandelt werden. Versuche zeigen, dass zur Behandlung von Wein-Maische mit Ê=40 kV/cm ein Überdruck von etwa 3 bar erforderlich ist. Der nachfolgend beispielhaft beschriebene Zellaufschlussreaktor wurde auf eine Behandlung mit bis zu Ê=60 kV/cm bei 7 bar Überdruck ausgelegt. Der geringste gängige Schlauchdurchmesser zur Förderung von Weinmaische beträgt ca. 40 mm (DN40). Diese entspricht einem Förderquerschnitt von 12,56 cm². Von den möglichen rechteckigen Querschnitten des Behandlungsbereichs weist ein quadratischer Querschnitt als Spezialfall des Rechtecks bei gegebenem Förderquerschnitt die geringste Wandfläche und damit den geringsten Strömungswiderstand auf. Daher wurde als Behandlungsquerschnitt ein Quadrat mit 3,5 cm Seitenlänge entsprechend 12,25 cm² Querschnittsfläche gewählt.

Der Elektrodenabstand von 3,5 cm ist gleichzeitig für die elektrische Auslegung der Elektroporationsanlage passend. Der Zellaufschlussreaktor ist für den Einbau in eine mobile Elektroporationsanlage konzipiert. Diese Anlage ist mit einem erdsymmetrisch bipolar betriebenen 6-stufigen Marxgenerator mit einer Stufenkapazität von 140 nF bei einer Stufenladespannung von bis zu 50 kV bestückt. Die Auslegungsfeldstärke von Ê=60 kV/cm ergibt sich bei 50 kV Stufenladespannung für einen Lastwiderstand von ca. 35 Ohm. Bei einer typischen Leitfähigkeit der Maische von ca. 3 mS/cm ist bei einem quadratischen Behandlungsquerschnitt von 3,5 x 3,5 cm² unter Einbeziehung der Randfeldbereiche eine Elektrodenlänge von ca. 9 cm erforderlich. Bei einem Überdruck von 7 bar wirkt auf die Elektrode eine Kraft von 2205 N.

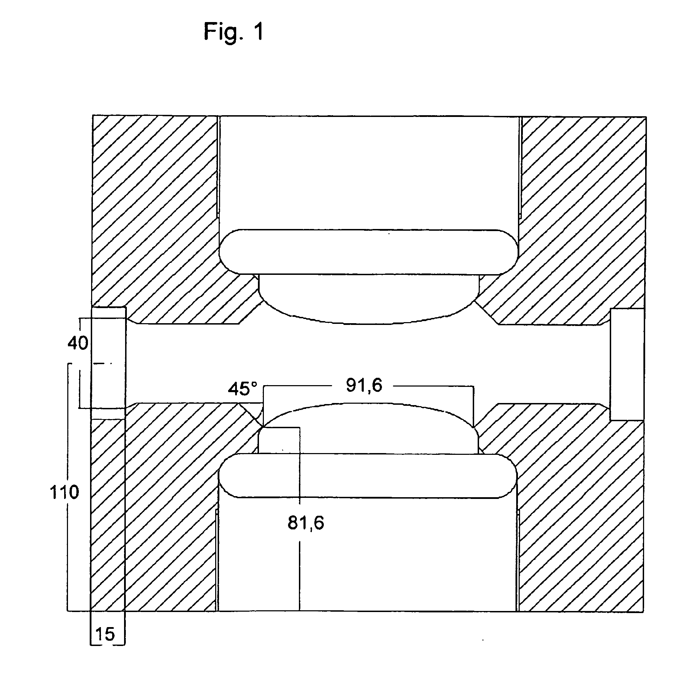

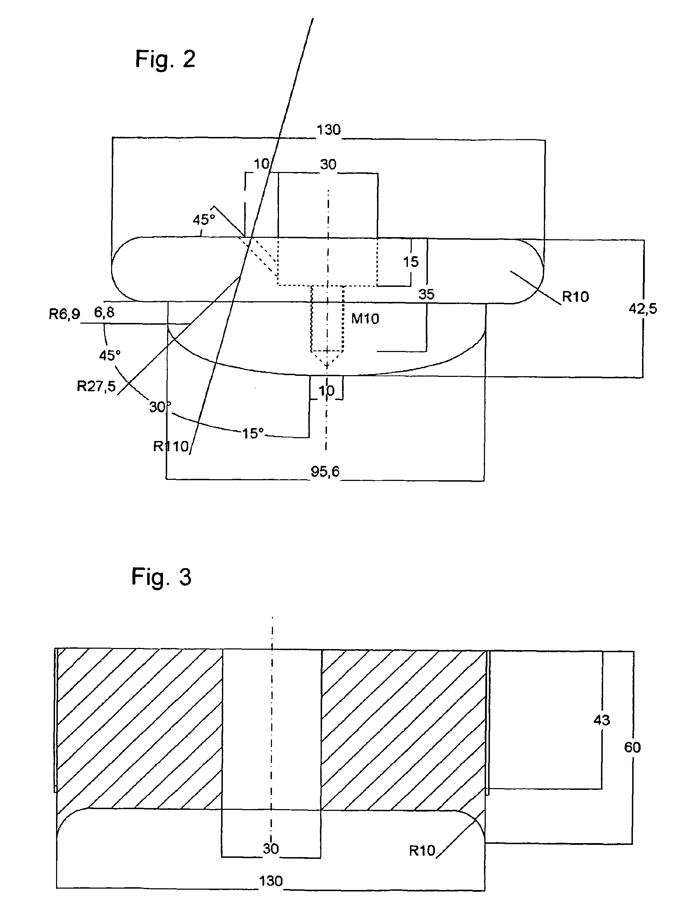

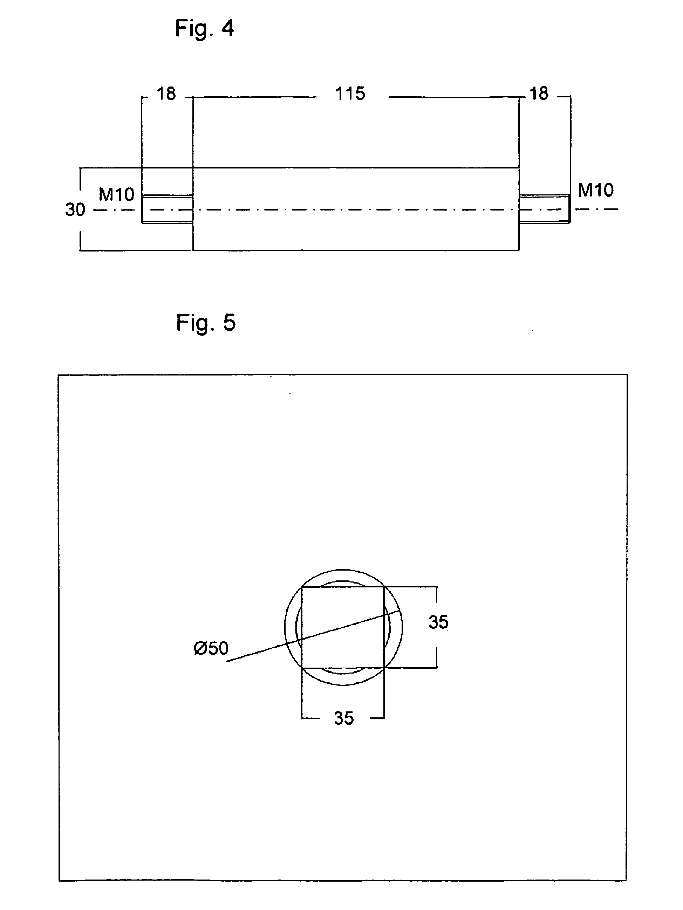

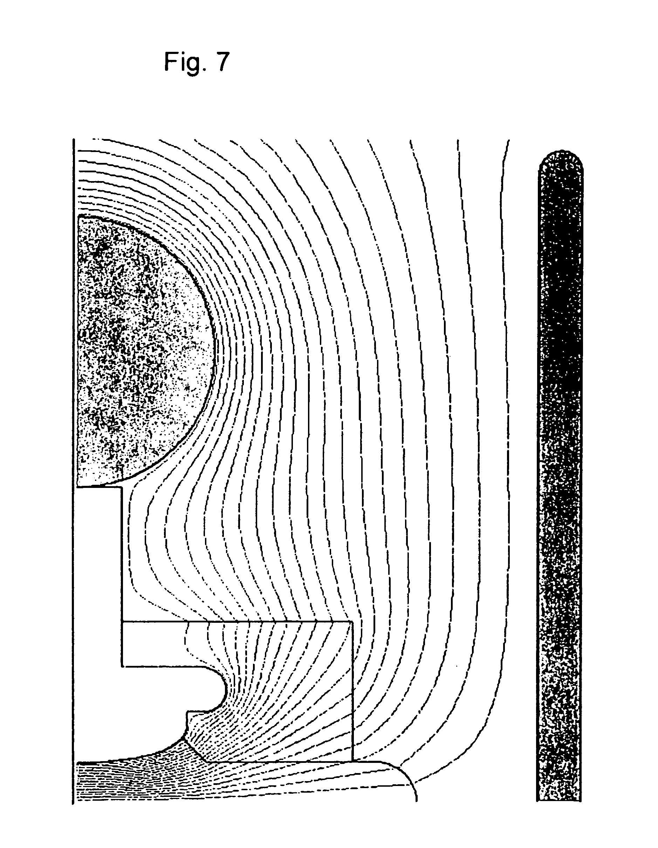

Ausgeführt wurde der Zellaufschlussreaktor als in einen aus einem zylindrischen Vollmaterial gefertigten Isolierkörper aus hier Polypropylen, PP, eingepasstes rotationssymmetrisches Elektrodensystem mit eingefrästem Förderkanal (Fig. 1). Fig. 5 zeigt die Anschlussöffnung des Förderkanals mit dem Übergang von rundem zu quadratischem Querschnitt. Die eingelegten Elektroden (Figuren 1 und 2) werden über dielektrische Einschraubteile (Fig. 3) flächig angepresst, so dass eine gute Kraftübernahme von den Elektroden bei Druckbeaufschlagung gewährleistet ist (Form- und Kraftschluss). Der elektrische Anschluss erfolgt über jeweils eine Welle/einen Gewindebolzen (Fig. 4). Der Ausgang des elektrischen Energiespeichers/Marx-Generators (dieser ist in der Zeichnung nirgends angedeutet) ist mit beiden Elektrodenanschlüssen elektrisch leitend verbunden. Fig. 1 zeigt die Zusammenstellung aus Isolierkörper in Schnittdarstellung und einliegenden Elektroden. Die rotationssymmetrische Form ermöglicht eine einfache Fertigung der Einzelteile als Drehteile. Das elektrische Feld wird in der Umgebung des Strömungskanals kapazitiv gesteuert. Dies unterstützt die resistive Feldsteuerung im Kanalinnern durch den Spannungsabfall längs der Flüssigkeit. Insbesondere in Weinmaische sind Traubenkerne enthalten, die eine wesentlich geringere Leitfähigkeit als der Traubensaft besitzen. Sie verursachen daher in ihrer Umgebung in einem elektrischen Strömungsfeld eine Feldstärkeüberhöhung. Halten sich die Kerne in Wandnähe nahe einer Elektrode auf, wird auch das Feld im Isolierstoff der Wand erhöht. Die kapazitive Feldsteuerung in der Umgebung des Strömungskanals reduziert das Feld im Wandbereich im Vergleich zu einem Entwurf ohne zusätzliche kapazitive Feldsteuerung. Fig. 7 zeigt das näherungsweise Feldlinienbild einer rotationssymmetrischen Simulation. Die abgeknickte, exponierte dielektrische Fläche stößt senkrecht auf die Elektrodenstirnfläche. Beim Entwurf wurde eine geringfügige Randfeldüberhöhung am Übergang vom flachen zum gebogenen Elektrodenteil zugelassen. Hierdurch vergrößert sich der nutzbare Elektroporationsbereich der als Bereich mit einer Feldstärkeabweichung von +/-5% definiert sei. Eine ausgeprägtere Homogenität ließe sich durch eine Verlängerung des Reaktors erzielen. Die in den Zeichnungen angegebenen Maße sind speziell auf die vorhandene Anlage zugeschnitten. Das Ausführungsbeispiel ist deshalb beispielhaft.

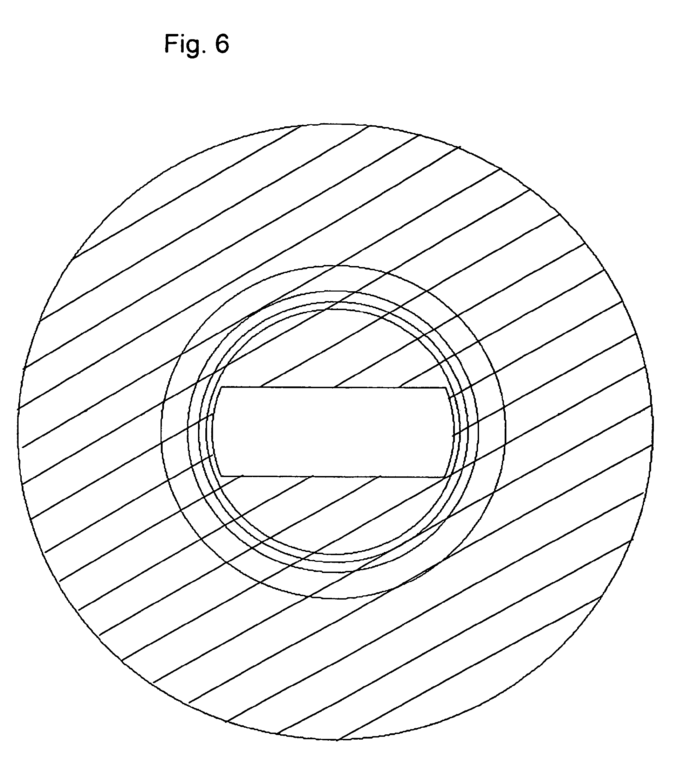

Durch Variation der Maße lässt sich das Bauprinzip auf andere Anwendungen übertragen. So kann auch bei länglichen, nicht rotationssymmetrischen Zellaufschlussreaktoren das Randfeld beidseitig des Kanals durch über den Kanal überstehende Elektroden gesteuert werden. Dazu sind diese Elektroden in die isolierenden Kanalwände eingepasst. Figur 6 zeigt die Sicht auf den Strömungskanal des Zellaufschlussreaktors durch einen Elektrodensitz hindurch und damit gleichzeitig den im Einbau exponierten Stirnteilbereich der beiden spaltbildenden Elektroden.

Der Überdruck im Zellaufschlussreaktor bei gleichzeitiger Förderung wird durch die Serienschaltung der ersten und zweiten geregelten Maischepumpe erzielt. Während eine Pumpe mit konstanter Drehzahl den Durchfluss bestimmt, wird die Drehzahl der anderen Pumpe aufgrund einer Druckmessung unmittelbar vor dem Zellaufschlussreaktor so geregelt, dass der gewünschte Druck im Zellaufschlussreaktor konstant bleibt. Dies geschieht über einen P-Regler, der die Drehzahldifferenz zwischen beiden Pumpen beeinflusst. Ein Windkessel beispielsweise puffert die Maische bei kurzzeitigen Förderungleichheiten beider Pumpen und verlangsamt so die Antwort der Regelstrecke.

## Patentansprüche

1. Einrichtung zur druckgesteuerten und druckgeregelten, elektroporativen Behandlung biologisch pflanzlichen Prozessguts, bestehend aus:
einem Zellaufschlussreaktor, der Bestandteil eines Strömungskanals für das Prozessgut ist,
wobei:
der Zellaufschlussreaktor aus einem dielektrischen Teil besteht in dem ein spaltbildendes und den Strömungskanal mitbildendes Elektrodenpaar form- und kraftschlüssig sitzt,
die Elektrodenachse die dortige Kanalachse des Strömungs-kanals schneidet und sich die beiden Elektroden stirnseitig mit einem zentralen freien, in den Strömungskanal exponierten Stirnteilbereich spiegelbildlich zur Kanalachse gegenüber stehen,
sich der Krümmungsradius der Elektrodenstirnfläche von einem zentralen Gebiet der Stirnfläche zu ihrer Kontur hin von einem größten zu einem kleinsten hin bereichsweise oder kontinuierlich verringert,
einer ersten Prozessgutpumpe vor dem Strömungskanaleingang und einer zweiten Prozessgutpumpe nach dem Strömungskanalausgang des Zellaufschlussreaktors zum druckbeaufschlagbaren Strömen des Prozessguts durch den Zellaufschlussreaktor,

2. Einrichtung nach Anspruch 1, **dadurch gekennzeichnet, dass** der lichte Querschnitt des Strömungskanals im Zell-aufschlussreaktor außerhalb des Elektrodenbereichs einfach rund oder einfach polygonal ist.

3. Einrichtung nach Anspruch 2, **dadurch gekennzeichnet, dass** die zentral freie, in den Strömungskanal exponierte Stirnteilfläche der jeweiligen Elektrode längs zur Kanal-achse eine größere Ausdehnung hat als senkrecht dazu.

4. Einrichtung nach Anspruch 3, **dadurch gekennzeichnet, dass** der lichte Querschnitt im zentralen Stirnbereich der beiden spaltbildenden Elektroden gleich oder nahezu gleich dem lichten Querschnitt am Strömungskanalein- und -ausgang des Zellaufschlussreaktors ist.

5. Einrichtung nach Anspruch 4, **dadurch gekennzeichnet, dass** an den Strömungskanal zwischen der ersten Prozessgut-pumpe und dem Zellaufschlussreaktor und/oder zwischen dem Zellaufschlussreaktor und der zweiten Prozessgutpumpe ein Pufferspeicher angeschlossen ist oder
der Strömungskanal mindestens teilweise als solcher dehnbar ausgestaltet ist.

6. Einrichtung nach Anspruch 5, **dadurch gekennzeichnet, dass** die örtliche Normale der exponierten Oberfläche des dielektrischen Teils entlang eines von der Berührlinie mit dem exponierten Stirnteilbereich der Elektrodenstirn be-grenzten Streifens mit der dortigen Normalen der exponier-ten Stirnteilfläche einen Winkel aus dem Bereich 0 < α <= 90° bildet.

7. Einrichtung nach Anspruch 6, **dadurch gekennzeichnet, dass**: der Zellaufschlussreaktor vollständig innerhalb eines Abschirmvolumens aufgestellt ist,
die beiden Durchdringungen des Strömungskanals durch die Abschirmungswand jeweils als elektrisch leitfähige Rohreinheit mit einer Länge von mindestens dem einfachen Rohrdurchmesser ausgeführt ist und die Förderstrecke durch jeweils ein isolierendes Rohr zwischen dem Zellaufschluss-reaktor und der Durchdringung der Abschirmung zu- und ab-flussseitig mindestens dem 2-fachen Abstand des Elektro-denspalts entspricht.

8. Einrichtung nach Anspruch 7, **dadurch gekennzeichnet, dass** der Strömungskanalabschnitt des Zellaufschlussre-aktors senkrecht steht.

9. Einrichtung nach Anspruch 8, **dadurch gekennzeichnet, dass** die Werkstoffe des Zellaufschlussreaktors prozesstauglich sind und die exponierten Oberflächen gegenüber dem durchströmenden Prozessmedium inert sind, der dielektrische Werkstoff im Nennbetrieb elektrisch isolierend, hochspannungsfest, elastisch und druckbelastbar ist.

10. Verfahren zum Betreiben einer Einrichtung zur druckgesteuerten und druckgeregelten, elektroporativen Behandlung biologisch pflanzlichen Prozessguts nach den Ansprüchen 1 bis 9, bestehend aus den Schritten:
durch das Anlegen einer pulsförmigen Spannung an das spalterzeugende Elektrodenpaar wird im zentralen Bereich des Elektrodenspalts ein elektrisches Feld bis zu 100 kV/cm erzeugt,
über die beiden hinsichtlich der Strömung des Prozessguts zueinander in Reihe liegenden Prozessgutpumpen wird der Durchfluss durch den dazwischen liegenden Zellaufschluss-reaktor gesteuert und wird der Druck auf das Prozessgut im Zellaufschlussreaktor auf einstellbare Konstanz bis zu 10 bar gesteuert oder geregelt über eine Proportionalregelung der Drehzahldifferenz.

11. Verfahren nach Anspruch 10, **dadurch gekennzeichnet, dass** das Prozessgut bei kurzzeitigen Ungleichheiten in der Förderung über die Dehnbarkeit des Strömungskanals zwi-schen der ersten Prozessgutpumpe und dem Zellaufschluss-reaktor und/oder dem Zellaufschlussreaktor und der zweiten Prozessgutpumpe gepuffert wird.

12. Verfahren nach Anspruch 11, **dadurch gekennzeichnet, dass** zum Prozessieren des durch den Zellaufschlussreaktor strömenden Prozessguts an das spaltbildende Elektrodenpaar eine zu einem Bezugspotential symmetrische Spannung
oder
eine Spannung zwischen den beiden spaltbildenden Elektroden, die sich zu einer der beiden auf einem Bezugspotential liegenden Elektroden ausbildet, angelegt wird.

13. Verfahren nach Anspruch 12, **dadurch gekennzeichnet, dass** der Zellaufschlussreaktor zum Prozessieren von unten nach oben durchströmt wird.

## Claims

1. A device for pressure-controlled and pressure-regulated electroporative treatment of biological vegetable process matter,
comprising:
a cell disruption reactor that is a component of a flow channel for the process matter,
wherein:
the cell disruption reactor consists of a dielectric part in which a gap-generating electrode pair that also forms the flow channel is located in a positive-locking and friction-locking manner,
the electrode axis intersects with the local channel axis of the flow channel and the two electrodes are opposed on the face side with a centrally free front part area exposed into the flow channel in mirror-image to the channel axis,
the radius of curvature of the electrode front surface decreases area-wise or continuously from a central region of the front surface to the contour thereof from largest to smallest,
a first process matter pump upstream of the flow channel inlet and a second process matter pump downstream of the flow channel outlet of the cell disruption reactor for pressurized flow of the process matter through the cell disruption reactor.

2. The device according to claim 1, **characterized in that** the clear cross-section of the flow channel in the cell disruption reactor is simply round or simply polygonal outside of the electrode area.

3. The device according to claim 2, **characterized in that** the centrally free front part surface of the respective electrode exposed into the flow channel has a larger extension along the channel axis than vertically thereto.

4. The device according to claim 3, **characterized in that** the clear cross-section in the central front region of the two gap-generating electrodes is equal or approximately equal to the clear cross-section at the flow channel inlet and outlet of the cell disruption reactor.

5. The device according to claim 4, **characterized in that** a buffer memory is connected to the flow channel between the first process matter pump and the cell disruption reactor and/or between the cell disruption reactor and the second process matter pump or
the flow channel is at least partially formed to be elastic as such.

6. The device according to claim 5, **characterized in that** the local normal of the exposed surface of the dielectric part along a strip defined by the contact line with the exposed front part region of the electrode front forms an angle from the range of 0 < α ≤ 90° with the local normal of the exposed front part surface.

7. The device according to claim 6, **characterized in that**: the cell disruption reactor is completely set up inside a shielding volume,
the two penetrations of the flow channel through the shielding wall are respectively realized as an electrically conductive pipe unit having a length of at least one-fold pipe diameter and the travel path through a respective insulating pipe between the cell disruption reactor and the penetration of the shielding corresponds to at least the two-fold distance of the electrode gap on the inlet and the outlet sides.

8. The device according to claim 7, **characterized in that** the flow channel portion of the cell disruption reactor is vertical.

9. The device according to claim 8, **characterized in that** the materials of the cell disruption reactor are process-efficient and the exposed surfaces are inert to the passing process medium, the dielectric material in the nominal operation is electrically insulating, high voltage resistant, flexible and pressure resistant.

10. A method for operating a device for pressure-controlled and pressure-regulated electroporative treatment of biological vegetable process matter according to claims 1 to 9, consisting of the steps:
of an electrical field of up to 100 kV/cm being generated in the central region of the electrode gap by applying a pulse-shaped voltage to the gap-generating electrode pair,
via the two process matter pumps arranged in series with each other in terms of the flow of the process matter, the flow is controlled by the interposed cell disruption reactor and the pressure onto the process matter in the cell disruption reactor is controlled or regulated to an adjustable constancy of up to 10 bar via a proportional regulation of the rotational speed difference.

11. The method according to claim 10, **characterized in that** the process matter is buffered in case of short-term inequalities in delivery via the elasticity of the flow channel between the first process matter pump and the cell disruption reactor and/or the cell disruption reactor and the second process matter pump.

12. The method according to claim 11, **characterized in that** for processing the process matter flowing through the cell disruption reactor a voltage symmetrical to a reference potential is applied to the gap-generating electrode pair
or
a voltage is applied between the two gap-generating electrodes forming into one of the two electrodes located on a reference potential.

13. The method according to claim 12, **characterized in that** for processing the cell disruption reactor is flown through from the bottom to the top.

## Revendications

1. °) Installation pour le traitement par électroporation régulé et commandé en pression de produits végétaux de traitement biologique comprenant :
- un réacteur de dissolution de cellules faisant partie d'un canal d'écoulement du produit de traitement,
* le réacteur de dissolution de cellules se composant d'une partie diélectrique dans laquelle est installée, par une liaison par la forme et la force, une paire d'électrodes formant un intervalle et faisant partie du canal d'écoulement,
- l'axe des électrodes coupant à cet endroit l'axe du canal d'écoulement, et les deux électrodes se font face de manière symétrique plane par rapport à l'axe du canal, par une zone partielle frontale, dégagée au centre et exposée dans le canal d'écoulement,
- le rayon de courbure de la surface frontale des électrodes diminuant de manière continue ou par zone à partir de la région centrale de la surface frontale jusqu'au contour entre le rayon le plus grand et le plus petit,
- une première pompe de produit de traitement en amont de l'entrée du canal d'écoulement et une seconde pompe de produit de traitement en aval de la sortie du canal d'écoulement du réacteur de dissolution de cellules, pour faire passer le produit de traitement sous pression à travers le réacteur de dissolution de cellules.

2. °) Installation selon la revendication 1,
**caractérisée en ce que**
la section libre du canal d'écoulement dans le réacteur de dissolution de cellules, au-delà de la zone occupée par les électrodes, est simplement circulaire ou simplement polygonale.

3. °) Installation selon la revendication 2,
**caractérisée en ce que**
la surface frontale partielle centrale libre de chaque électrode, exposée dans le canal d'écoulement le long de l'axe du canal, a une extension plus grande que dans la direction perpendiculaire.

4. °) Installation selon la revendication 3,
**caractérisée en ce que**
la section libre dans la zone frontale centrale des deux électrodes formant l'intervalle, est égale ou pratiquement égale à la section libre à l'entrée et à la sortie du canal d'écoulement du réacteur de dissolution de cellules.

5. °) Installation selon la revendication 4,
**caractérisée en ce qu'**
entre la première pompe de produit de traitement et le réacteur de dissolution de cellules et/ou entre le réacteur de dissolution de cellules et la seconde pompe de produit de traitement,
- un accumulateur tampon est relié au canal d'écoulement, ou
- le canal d'écoulement a une forme au moins partiellement étendue.

6. °) Installation selon la revendication 5,
**caractérisée en ce que**
la normale locale de la surface exposée de la partie diélectrique le long d'une bande délimitée par la ligne de contact avec la zone de surface partielle exposée de la face frontale d'électrode, forme avec la normale locale à la surface partielle frontale exposée, un angle compris dans une plage 0 < α < = 90°.

7. °) Installation selon la revendication 6,
**caractérisée en ce que**
le réacteur de dissolution de cellules est installé totalement dans un volume de protection,
- les deux passages du canal d'écoulement à travers la paroi de protection, sont réalisés chacun comme unité tubulaire électroconductrice ayant une longueur égale à au moins le diamètre du tube, et
- le chemin de transfert à travers chaque fois un tube isolant entre le réacteur de dissolution de cellules et la traversée de la protection du côté d'entrée et du côté de sortie du flux, correspond au moins à deux fois la distance de l'intervalle entre les électrodes.

8. °) Installation selon la revendication 7,
**caractérisée en ce que**
le segment de canal d'écoulement du réacteur de dissolution de cellules, est vertical.

9. °) Installation selon la revendication 8,
**caractérisée en ce que**
les matériaux du réacteur de dissolution de cellules sont compatibles avec le procédé et les surfaces exposées sont inertes vis-à-vis du milieu de traitement qui passe, le matériau diélectrique étant électroisolant en mode de fonctionnement nominal, résistant aux hautes tensions, élastique et susceptible de résister à une pression.

10. °) Procédé de gestion d'une installation pour le traitement par électroporation commandé et régulé en pression de produits de traitement végétaux biologiques selon les revendications 1 à 9, comprenant les étapes suivantes :
- appliquer une tension impulsionnelle à la paire d'électrodes formant l'intervalle dans la zone centrale de l'intervalle des électrodes avec un champ électrique allant jusqu'à 100 kV/cm,
- commander le débit du produit de traitement par les pompes montées en série à travers le réacteur de dissolution de cellules installé entre les pompes, et commander ou réguler la pression du produit de traitement dans le réacteur de dissolution de cellules sur une valeur constante réglable allant jusqu'à 10 bars, par régulation proportionnelle de la différence des vitesses de rotation.

11. °) Procédé selon la revendication 10,
**caractérisé en ce qu'**
en cas de brèves irrégularités de débit, on accumule le produit de traitement par l'extension du canal d'écoulement entre la première pompe de produit et le réacteur de dissolution de cellules et/ou le réacteur de dissolution de cellules et la seconde pompe de produit de traitement.

12. °) Procédé selon la revendication 11,
**caractérisé en ce qu'**
on applique une, tension symétrique en potentiel à la paire d'électrodes formant l'intervalle pour traiter le produit de traitement passant dans le réacteur de dissolution de cellules, ou
- une tension entre les deux électrodes formant l'intervalle, et qui se développe par rapport à l'une des deux électrodes qui est à un potentiel de référence.

13. °) Procédé selon la revendication 12,
**caractérisé en ce que**
le réacteur de dissolution de cellules est traversé de haut en bas pour le traitement.
